(19) **Europäisches Patentamt / European Patent Office / Office européen des brevets**

(11) **EP 3 920 299 B1**

(12) **EUROPEAN PATENT SPECIFICATION**

(45) Date of publication and mention of the grant of the patent:
**03.05.2023 Bulletin 2023/18**

(21) Application number: **20810593.2**

(22) Date of filing: **15.05.2020**

(51) International Patent Classification (IPC):
*H01M 10/052* $^{(2010.01)}$   *H01M 50/409* $^{(2021.01)}$
*H01M 50/403* $^{(2021.01)}$   *H01M 50/423* $^{(2021.01)}$
*H01M 50/431* $^{(2021.01)}$   *H01M 50/434* $^{(2021.01)}$
*H01M 50/446* $^{(2021.01)}$   *H01M 50/449* $^{(2021.01)}$

(52) Cooperative Patent Classification (CPC):
**H01M 50/423; H01M 10/052; H01M 50/403;**
**H01M 50/409; H01M 50/431; H01M 50/434;**
**H01M 50/443; H01M 50/446; H01M 50/449;**
**H01M 50/489; H01M 50/491;** H01M 50/417;
H01M 50/451; Y02E 60/10

(86) International application number:
**PCT/JP2020/019542**

(87) International publication number:
**WO 2020/235508 (26.11.2020 Gazette 2020/48)**

(54) **SEPARATOR FOR NON-AQUEOUS SECONDARY BATTERY, METHOD FOR PRODUCING SAME, AND NON-AQUEOUS SECONDARY BATTERY**

SEPARATOR FÜR EINE WASSERFREIE SEKUNDÄRBATTERIE, HERSTELLUNGSVERFAHREN DAFÜR UND WASSERFREIE SEKUNDÄRBATTERIE

SÉPARATEUR POUR BATTERIE SECONDAIRE NON AQUEUSE, SON PROCÉDÉ DE FABRICATION ET BATTERIE SECONDAIRE NON AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2019 JP 2019093572**

(43) Date of publication of application:
**08.12.2021 Bulletin 2021/49**

(73) Proprietor: **Teijin Limited**
**Osaka 530-0005 (JP)**

(72) Inventors:
• **OKAZAKI, Masato**
  **Osaka-shi, Osaka 530-0005 (JP)**
• **SATO, Megumi**
  **Osaka-shi, Osaka 530-0005 (JP)**
• **NISHIKAWA, Satoshi**
  **Osaka-shi, Osaka 530-0005 (JP)**

(74) Representative: **Carpmaels & Ransford LLP**
**One Southampton Row**
**London WC1B 5HA (GB)**

(56) References cited:
EP-A1- 3 745 492       EP-A1- 3 920 263
EP-A1- 3 920 264       JP-A- 2000 030 686
JP-A- 2010 092 717     JP-A- 2011 216 318
JP-B2- 5 876 221       JP-B2- 6 093 814
US-A1- 2011 143 185    US-A1- 2012 321 929
US-A1- 2018 233 726

**Description**

Technical Field

The present invention relates to a separator for a non-aqueous secondary battery, a method of producing the same, and a non-aqueous secondary battery.

Background Art

Non-aqueous secondary batteries represented by lithium ion secondary batteries are widely used as power sources for portable electronic devices such as notebook-size personal computers, mobile phones, digital cameras and camcorders. Recently, for a non-aqueous secondary battery represented by a lithium ion secondary battery, an application thereof as a battery for electric power storage or electric vehicles is being reviewed due to the property of a high energy density thereof. With spread of non-aqueous secondary batteries, it has been increasingly required to enhance safety battery characteristics.

A separator which is one of members constituting a non-aqueous secondary battery requires such heat resistance that a film is not easily broken even when the temperature inside the battery is high in order to ensure safety of the battery. As a separator having improved heat resistance, a separator including a porous layer containing inorganic particles on a porous substrate is known. For example, International Publication No. 2008/156033 discloses a separator including a heat-resistant porous layer containing wholly aromatic polyamide and inorganic particles on a porous substrate. EP3745492A1, EP3920263A1, EP3920264A1, and US2018/233726A1 relate to a separator for a non-aqueous secondary battery and a non-aqueous secondary battery. US2011/143185A1 and US2012/321929A1 relate to a separator for a nonaqueous secondary battery, and more particularly relates to a technique for improving the nonaqueous secondary battery in safety.

SUMMARY OF INVENTION

Technical Problem

The invention is defined by the appended claims. As the heat resistance of the separator, heat resistance from the viewpoint that the entire separator does not shrink (thermally shrink) at a high temperature and heat resistance that can withstand local heating (spot heating) of the separator are sometimes evaluated. The spot heating test is used as one of the indices for ensuring safety in a battery nail penetration test in which a test is performed by piercing a battery with a nail. In the battery nail penetration test, when a nail is pierced into a battery, the temperature of the nail becomes high, and the separator contracts at a location where the temperature rises to increase the short-circuit area, so that rapid energy release occurs. Thereby, the presence or absence of the phenomenon in which the battery is in a dangerous state is evaluated. The spot heating test simulates this, and a soldering iron having a tip with a diameter of 2 mm is brought into contact with the separator to evaluate the size of the hole generated in the contact portion. In recent years, the spot heating characteristics have been increasingly emphasized as characteristics required for separators.

In order to improve the spot heating characteristics, it is conceivable that the inorganic particles are reduced in size, and the heat-resistant porous layer is densely filled with the inorganic particles. However, when the inorganic particles having a small particle size and a wholly aromatic polyamide are mixed to prepare a coating liquid, amide bonds in the wholly aromatic polyamide and surfaces of the inorganic particles interact with each other to form a hydrogen bond network, and the viscosity of the coating liquid may be significantly increased. When the viscosity of the coating liquid is high, the coating liquid does not flow in the coating equipment, the production speed of the separator decreases, or the properties in the coating liquid become uneven, which leads to poor appearance of the coating film. As a result, there is a risk that productivity of the separator may decrease.

On the other hand, the inorganic particles containing a metal hydroxide or a metal sulfate may be used.

However, when such inorganic particles and the wholly aromatic polyamide are mixed to prepare the coating liquid, the viscosity of the coating liquid may be significantly increased.

The present disclosure has been made in view of the above.

An object of one aspect of the present disclosure is to provide a separator for a non-aqueous secondary battery, which includes a heat-resistant porous layer containing a wholly aromatic polyamide and inorganic particles having a small particle size, and is excellent in productivity.

Another aspect of the present disclosure is to provide a separator for a non-aqueous secondary battery, which includes a heat-resistant porous layer containing a wholly aromatic polyamide and inorganic particles containing a metal hydroxide or a metal sulfate, and is excellent in productivity.

Another aspect of the present disclosure is directed to providing a non-aqueous secondary battery having excellent productivity.

Solution to Problem

The specific solutions to the problem are defined in the claims.

Advantageous Effects of Invention

According to one aspect of the present disclosure, it is possible to provide a separator for a non-aqueous secondary battery, which includes a heat-resistant porous layer containing a wholly aromatic polyamide and inorganic particles having a small particle size, and is excellent in productivity.

In addition, according to another aspect of the present disclosure, it is possible to provide a separator for a non-aqueous secondary battery, which includes a heat-resistant porous layer containing a wholly aromatic polyamide and inorganic particles containing a metal hydroxide or a metal sulfate, and is excellent in productivity.

Furthermore, according to another aspect of the present disclosure, it is possible to provide a non-aqueous secondary battery having excellent productivity.

DESCRIPTION OF EMBODIMENTS

Hereinafter, the embodiments will be described. Further, the description and the Examples thereof illustrate the embodiments, but do not limit the scope of the embodiments.

In the present disclosure, the numerical range denoted by using "to" represents the range inclusive of the number written before and after "to" as the minimum and maximum values. Regarding stepwise numerical ranges designated in the present disclosure, an upper or lower limit set forth in a certain numerical range may be replaced by an upper or lower limit of another stepwise numerical range described. Besides, an upper or lower limit set forth in a certain numerical range of the numerical ranges designated in the present disclosure may be replaced by a value indicated in Examples.

In the present disclosure, the term "process" includes not only an independent process, but also the process which is not clearly distinguished from other processes but achieves the desired purpose thereof.

In the present disclosure, when the amount of each component in a composition is referred to and when a plurality of substances corresponding to each component are present in the composition, the total amount of the plurality of components present in the composition is meant unless otherwise specified.

In the present disclosure, a "MD direction" means a longitudinal direction (that is, the conveyance direction) in a porous substrate and a separator manufactured into an long shape, and is also referred to as a "machine direction". In addition, a "TD direction" means a direction orthogonal to the "MD direction", and is also referred to as a "transverse direction".

In the present disclosure, a combination of two or more preferred aspects is a more preferred aspect.

In the present disclosure, when there are a plurality of substances corresponding to each component in the composition, the amount of each component in a composition or a layer means the total amount of a plurality of substances present in the composition unless otherwise specified.

In the present disclosure, "% by mass" and "% by weight" have the same meaning, and "parts by mass" and "parts by weight" have the same meaning.

<Separator for Non-aqueous Secondary Battery>

A separator for a non-aqueous secondary battery (in the present disclosure, it is also simply referred to as a "separator".) according to the present disclosure includes: a porous substrate; and a heat-resistant porous layer that is formed on one side or on both sides of the porous substrate, and that contains a wholly aromatic polyamide, inorganic particles and an ionic material. In an aspect (hereinafter, a first aspect) of the present disclosure, the inorganic particles have an average primary particle diameter of from 0.02 $\mu$m to less than 0.1 $\mu$m. In another aspect of the present disclosure (Hereinafter, a second aspect), the inorganic particles include a metal sulfate or a metal hydroxide. Such a separator of the present disclosure is excellent in productivity.

Specifically, in the first aspect of the present disclosure, the inorganic particles have an average primary particle diameter of from 0.02 $\mu$m to less than 0.1 $\mu$m. When such inorganic particles having a small particle size and the wholly aromatic polyamide are mixed to prepare a coating liquid, amide bonds in the wholly aromatic polyamide and surfaces of the inorganic particles interact with each other to form a hydrogen bond network, and the viscosity of the coating liquid may be significantly increased. However, in the present disclosure, by adding the ionic material to the coating liquid, even if the coating liquid is produced by mixing the inorganic particles having a small particle size as described above with the wholly aromatic polyamide, the viscosity of the coating liquid can be suppressed from increasing, and the productivity of the separator can be enhanced.

In addition, in the second aspect of the present disclosure, the inorganic particles contain a metal sulfate or a metal hydroxide, but also in the case of such inorganic particles, the viscosity of the coating liquid may be significantly increased. The reason for this is presumed to be that the sulfuric acid group on the surface of the metal sulfate particle or the hydroxyl group on the surface of the metal hydroxide particle interacts with the amide bond in the wholly aromatic polyamide to form a hydrogen bond network, thereby significantly increasing the viscosity of the coating liquid.

Hereinafter, details of the porous substrate and the heat-resistant porous layer included in the separator of the present disclosure will be described.

In the present disclosure, the first aspect and the second aspect exist, but common configurations will be collectively described.

[Porous Substrate]

The porous substrate in the present disclosure refers to a substrate having pores or voids therein. As the substrate, a microporous film; a porous sheet such as non-woven fabric composed of a fibrous material, and paper; and the like may be listed. In the present disclosure, a microporous film is preferable from the viewpoint of thinning and strength of a separator. The microporous film refers to a film having a large number of micropores therein, having a structure in which these micropores are connected to each other, and allowing gas or liquid to pass from one side to the other side.

As the material for the porous substrate, materials having electrical insulation are preferably used and any of organic materials and inorganic materials may be used.

It is preferred that the porous substrate contains a thermoplastic resin, from the viewpoint of imparting a shutdown function to the porous substrate. The shutdown function refers to a function of dissolving the constituent material to clog the pores of the porous substrate, thereby blocking ionic migration, and preventing thermal runaway of a battery, when the battery temperature is raised. As the thermoplastic resin, a thermoplastic resin having a melting point less than 200 °C is preferred. As the thermoplastic resin, for example, polyesters such as polyethylene terephthalate; polyolefins such as polyethylene and polypropylene; and the like may be mentioned, and among them, polyolefins are preferred.

As the porous substrate, a microporous film containing polyolefin (referred to as "polyolefin microporous film") is preferred. As the polyolefin microporous film, for example, a polyolefin microporous film which is applied to the conventional separator for a battery may be mentioned, and among them, it is preferred to select those having sufficient mechanical properties and ion permeability.

It is preferred that the polyolefin microporous film contains polyethylene, from the viewpoint of exhibiting the shutdown function, and the content of polyethylene is preferably 95 % by mass or more with respect to the total mass of the polyolefin microporous film.

It is preferred that the microporous film contains polypropylene, from the viewpoint of imparting heat resistance to the extent that the film is not easily broken when exposed to a high temperature.

It is preferred that the polyolefin microporous film contains polyethylene and polypropylene, from the viewpoint of imparting shutdown function and heat resistance that the film is not easily broken when exposed to a high temperature. As the polyolefin microporous film, a microporous film in which polyethylene and polypropylene are present in a mixed state in a layer may be mentioned. It is preferred that the microporous film contains 95 % by mass or more of polyethylene and 5 % by mass or less of polypropylene, from the viewpoint of compatibility of the shutdown function and heat resistance. In addition, from the viewpoint of compatibility of the shutdown function and heat resistance, a polyolefin microporous film having a lamination structure with two or more layers, in which at least one layer contains polyethylene and at least one layer contains polypropylene, is also preferred.

As the polyolefin contained in the polyolefin microporous film, a polyolefin having a weight-average molecular weight (Mw) of from 100,000 to 5,000,000 is preferred. In the case that the polyolefin has a Mw of 100,000 or more, sufficient mechanical properties may be provided to the microporous film. Meanwhile, the polyolefin has a Mw of 5,000,000 or less, the shutdown characteristic of the microporous film is faborable, and film molding of the microporous film is easy.

Examples of the method for manufacturing the polyolefin microporous film include, a method containing extruding a molten polyolefin resin from a T-die to form a sheet, crystallizing and elongating the sheet, and further subjecting the sheet to heat treatment, thereby obtaining a microporous film; and a method containing extruding a polyolefin resin melted with a plasticizer such as liquid paraffin from a T-die, cooling it to form a sheet, elongating the sheet, extracting the plasticizer, and performing heat treatment, thereby obtaining a microporous film.

As the porous sheet composed of a fibrous material, non-woven fabric composed of fibrous materials such as polyesters such as polyethylene terephthalate; polyolefins such as polyethylene and polypropylene; thermal resistant resins such as wholly aromatic polyamide, polyamideimide, polyimide, polyethersulfone, polysulfone, polyetherketone and polyetherimide; cellulose; and the like, or paper may be mentioned.

The surface of the porous substrate may be subjected to various surface treatments within the range of not impairing the nature of the porous substrate, for the purpose of improving wettability with the coating liquid for forming the heat-resistant porous layer. As the surface treatment, corona treatment, plasma treatment, flame treatment, UV irradiation treatment, and the like may be mentioned.

-Characteristics of Porous Substrate-

The thickness of the porous substrate is preferably 15 $\mu$m or less, more preferably 12 $\mu$m or less, from the viewpoint of enhancing energy density of the battery, and is preferably 4 $\mu$m or more, more preferably 6 $\mu$m or more, from the viewpoint of production yield of the separator and production yield of the battery.

The Gurley value of the porous substrate (JIS P8117:2009) is preferably from 50 sec/100 ml to 400 sec/100 ml from the viewpoint of ion permeability or suppression of battery short circuit.

The porous substrate preferably has a porosity of from 20% to 60% from the viewpoint of obtaining an appropriate film resistance and a shutdown function. The porosity of the porous substrate is determined by the following formula.

$$\varepsilon = \{1 - Ws/(ds \cdot t)\} \times 100$$

Here, $\varepsilon$, Ws, ds and t in the formula are as indicated below.

$\varepsilon$: porosity of porous substrate (%)
Ws: basis weight of porous substrate (g/m$^2$)
ds: true density of porous substrate (g/cm$^3$)
t: thickness of porous substrate (cm)

The porous substrate preferably has an average pore size of from 20 nm to 100 nm from the viewpoint of ion permeability or suppression of battery short circuit. The average pore size of the porous substrate is measured using a palm porometer according to ASTM E1294-89.

The puncture strength of the porous substrate is preferably 200 g or more from the viewpoint of production yield of the separator and production yield of the battery. The puncture strength of the porous substrate is measured by performing a puncture test under the condition of a curvature radius of a needle tip of 0.5 mm, and a puncture speed of 2 mm/sec, using a KES-G5 handy compression tester from KATO TECH CO., LTD., to obtain a maximum puncture load (g).

[Heat-resistant Porous Layer]

In the separator of the present disclosure, the heat-resistant porous layer is provided on one side or on both sides of the porous substrate, and contains a wholly aromatic polyamide, inorganic particles, and an ionic material. The heat-resistant porous layer is a layer having a large number of micropores and allowing gas or liquid to pass therethrough from one side to the other side.

In the separator of the present disclosure, the heat-resistant porous layer may be provided only on one side of the porous substrate, or may be provided on both sides of the porous substrate. When the heat-resistant porous layers are provided on both sides of the porous substrate, the heat resistance of the separator is more excellent, and the safety of a battery can be further improved. In addition, the separator is less likely to be curled, and has excellent handleability during production of a battery. When the heat-resistant porous layer is provided only on one side of the porous substrate, the separator has more excellent ion permeability. In addition, the thickness of the entire separator can be suppressed, and a battery having a higher energy density can be produced.

(Wholly aromatic polyamide)

The heat-resistant porous layer according to the first aspect of the present disclosure contains at least one wholly aromatic polyamide.

The wholly aromatic polyamide may be meta-type or para-type. Among the wholly aromatic polyamides, meta-wholly aromatic polyamides are preferable from the viewpoint that they are dissolved during the preparation of the coating liquid, but the liquid viscosity is likely to significantly increase, and the effect of the present disclosure is more effectively exhibited. In addition, the meta-wholly aromatic polyamide is excellent from the viewpoint of easily forming a porous layer and excellent in oxidation reduction resistance in an electrode reaction. The wholly aromatic polyamide may be copolymerized with a small amount of an aliphatic monomer.

As the wholly aromatic polyamide used as the binder resin of the heat-resistant porous layer, specifically, polymetaphenylene isophthalamide or polyparaphenylene terephthalamide is preferable, and polymetaphenylene isophthalamide is more preferable.

In the separator of the present disclosure, the heat-resistant porous layer may contain a resin other than the wholly aromatic polyamide. The other resin is used for the purpose of improving adhesiveness of the heat-resistant porous layer to an electrode, adjusting ion permeability or film resistance of the heat-resistant porous layer, and the like. Examples of the other resin include a homopolymer or a copolymer of a vinyl nitrile compound (acrylonitrile, methacrylonitrile, or the like), carboxymethyl cellulose, a hydroxyalkyl cellulose, a polyvinyl butyral, a polyvinyl pyrrolidone, and a polyether (polyethylene oxide, polypropylene oxide, or the like).

In the separator of the present disclosure, in a case of including a resin other than the wholly aromatic polyamide in the heat-resistant porous layer, the total content of the other resins is preferably 5% by mass or less, more preferably 3% by mass or less, still more preferably 1% by mass or less, and particularly preferably the other resins are substantially not contained.

(Inorganic particles)

The heat-resistant porous layer according to the first aspect of the present disclosure contains at least one type of inorganic particles having an average primary particle diameter of from 0.02 μm to less than 0.1 μm.

In the first aspect of the separator of the present disclosure, it is important that the average primary particle diameter of the inorganic particles is from 0.02 μm to less than 0.1 μm. When the average primary particle diameter of the inorganic particles is 0.02 μm or more, it is possible to prevent the viscosity of the coating liquid from excessively increasing, so that the productivity of the separator is easily improved, and the spot heating characteristics are also easily improved. From such a viewpoint, the average primary particle diameter of the inorganic particles is more preferably 0.03 μm or more, and still more preferably 0.04 μm or more. On the other hand, when the average primary particle diameter of the inorganic particles contained in the heat-resistant porous layer is less than 0.1 μm, the inorganic particles easily form a closest-packed structure in the heat-resistant porous layer, and the spot heating characteristics are easily improved. From such a viewpoint, the average primary particle diameter of the inorganic particles is more preferably 0.09 μm or less, still more preferably 0.08 μm or less, and particularly preferably 0.07 μm or less. Such small inorganic particles are likely to cause problems of the productivity as described above.

In the second aspect of the present disclosure, the average primary particle diameter of the inorganic particles is preferably from 0.02 μm to less than 0.1 μm, but the average primary particle diameter is not limited thereto, and inorganic particles having an average primary particle diameter of from 0.01 μm to 1 μm can also be applied.

The average primary particle diameter of the inorganic particles can be determined by measuring the major diameters of 100 inorganic particles randomly selected in observation with a scanning electron microscope (SEM), and averaging the major diameters of 100 inorganic particles. When the primary particle diameter of the inorganic particles is small and it is difficult to measure the major diameter of the inorganic particles, and/or when the aggregation of the inorganic particles is remarkable and the major diameter of the inorganic particles cannot be measured, the BET specific surface area ($m^2$/g) of the inorganic particles is measured, and the average primary particle diameter can be obtained according to the following formula assuming that the inorganic particles are true spheres.

$$\text{Average primary particle diameter (μm)} = 6 \div [\text{specific gravity (g/cm}^3) \times \text{BET specific surface area (m}^2\text{/g})]$$

The BET specific surface area ($m^2$/g) is determined by a BET multipoint method in a gas adsorption method using nitrogen gas. In the measurement by the gas adsorption method, nitrogen gas is adsorbed on the inorganic particles at a boiling point temperature (-196°C) of liquid nitrogen.

In a second aspect of the present disclosure in the separator of the present disclosure, the inorganic particles include a metal sulfate or a metal hydroxide. The metal sulfate or metal hydroxide is excellent in that the reaction with the electrolytic solution is small and gas generation in the battery can be prevented in addition to improving the heat resistance of the separator. However, such a metal sulfate or metal hydroxide has the above-described problem of productivity. Examples of the metal sulfate include barium sulfate, magnesium sulfate, and calcium sulfate. Examples of the metal hydroxide include magnesium hydroxide, aluminum hydroxide, calcium hydroxide, chromium hydroxide, zirconium hydroxide, cerium hydroxide, nickel hydroxide, boron hydroxide, and the like. In particular, the inorganic particles are preferably one or more selected from the group consisting of barium sulfate and magnesium hydroxide from the viewpoint of heat resistance and gas generation prevention.

In the first aspect of the present disclosure, the inorganic particles preferably include a metal sulfate or a metal hydroxide, but are not limited thereto, and other inorganic particles can also be applied in place of or in addition to the metal sulfate and the metal hydroxide. Examples of other inorganic particles include particles of metal oxides such as magnesium oxide, alumina, boehmite (alumina monohydrate), titania, silica, zirconia, barium titanate, and zinc oxide; particles of metal carbonates such as magnesium carbonate and calcium carbonate; particles of metal nitrides such as magnesium nitride, aluminum nitride, calcium nitride, and titanium nitride; metal fluorides such as magnesium fluoride and calcium fluoride; clay minerals such as calcium phosphate, apatite, calcium silicate, and talc, and the like.

These other particles can be used in combination with a metal sulfate or a metal hydroxide in the second aspect of the present disclosure.

The inorganic particles may be surface-modified with a silane coupling agent or the like. These inorganic particles may be used singly or in combination of two or more kinds thereof.

The particle shape of the inorganic particles is not limited, and may be any of a spherical shape, an elliptical shape, a plate shape, a needle shape, and an amorphous shape. The inorganic particles contained in the heat-resistant porous layer are preferably plate-shaped particles or primary particles that are not aggregated from the viewpoint of suppressing short circuit of the battery.

From the viewpoint of heat resistance, the volume ratio of the inorganic particles in the heat-resistant porous layer is preferably 30% by volume or more, more preferably 40% by volume or more, still more preferably 45% by volume or more, and particularly preferably 50% by volume or more in terms of the amount of the inorganic particles with respect to the total amount of the wholly aromatic polyamide and the inorganic particles. The volume ratio of the inorganic particles in the heat-resistant porous layer is preferably 95% by volume or less, more preferably 85% by volume or less, and still more preferably 80% by volume or less in terms of the amount of the inorganic particles with respect to the total amount of the wholly aromatic polyamide and the inorganic particles from the viewpoint that the heat-resistant porous layer is hardly peeled off from the porous substrate.

Among them, the amount of the inorganic particles with respect to the total amount of the wholly aromatic polyamide and the inorganic particles is preferably from 30% by volume to 95% by volume, and more preferably from 40% by volume to 95% by volume.

(Ionic material)

The heat-resistant porous layer in the present disclosure contains at least one ionic material. The ionic material can be selected from materials generated by bonding a cation and an anion by a Coulomb force.

The ionic material is one or more selected from the group consisting of a metal nitrate, a metal chloride, a metal chlorate, a metal perchlorate, a metal bromide, a metal iodide, a metal iodate, and a metal fluoride. More specifically, examples of the metal nitrate include silver nitrate, barium nitrate, calcium nitrate, cerium nitrate, and copper (II) nitrate. Examples of the metal chloride include aluminum chloride, anhydrous calcium chloride, calcium chloride dihydrate, cerium chloride, cobalt (II) chloride, cesium chloride, copper (II) chloride, potassium chloride, iron (III) chloride, lithium chloride, and sodium chloride. Examples of the metal chlorate include potassium chlorate, lithium chlorate, and sodium chlorate. Examples of the metal perchlorate include barium perchlorate, calcium perchlorate, cesium perchlorate, potassium perchlorate, lithium perchlorate, magnesium perchlorate, and sodium perchlorate. Examples of the metal bromide include barium bromide, calcium bromide, cerium bromide, cobalt (II) bromide, cesium bromide, copper (II) bromide, potassium bromide, lithium bromide, lithium perbromate, and magnesium bromide. Examples of the metal iodide include calcium iodide, cerium iodide, cesium iodide, magnesium iodide, and sodium iodide. Examples of the metal iodate include lithium iodate. Examples of the metal fluoride include cesium fluoride, lithium fluoride, and sodium fluoride. In particular, anhydrous calcium chloride, calcium chloride dihydrate, and lithium chloride are preferable in that the productivity is more easily improved.

(Other components)

The heat-resistant porous layer may further contain other components, if necessary, in addition to the wholly aromatic polyamide, the inorganic particles, and the ionic material.

-Characteristics of Heat-resistant Porous Layer-

The thickness of the heat-resistant porous layer is preferably 0.5 $\mu$m or more per one side and more preferably 1 $\mu$m or more per one side from the viewpoint of heat resistance or handleability of the separator, and is preferably 5 $\mu$m or less per one side, and more preferably 4 $\mu$m or less per one side from the viewpoint of handleability of the separator or energy density of a battery. The thickness of the heat-resistant porous layer is preferably 1 $\mu$m or more, more preferably 2 $\mu$m or more, and preferably 10 $\mu$m or less, more preferably 8 $\mu$m or less as a total thickness thereof on both sides of the porous substrate even if the heat-resistant porous layer is provided only on one side of the porous substrate or on both sides thereof.

The mass of the heat-resistant porous layer per unit area is preferably 1.0 g/m² or more, more preferably 2.0 g/m² or more, still more preferably 3.5 g/m² or more, further still more preferably 4.0 g/m² or more, and further still more preferably 4.5 g/m² or more as a total mass thereof on both sides of the porous substrate from the viewpoint of heat resistance or handleability of the separator, and is preferably 30.0 g/m² or less, more preferably 20.0 g/m² or less, still more preferably 10.0 g/m² or less, and further still more preferably 8.0 g/m² or less as a total mass thereof on both sides of the porous substrate from the viewpoint of handleability of the separator or energy density of a battery.

When the heat-resistant porous layers are provided on both sides of the porous substrate, a difference in the mass of the heat-resistant porous layer between one side and the other side is preferably 20% by mass or less with respect to the total mass on both sides from the viewpoint of suppressing curling of the separator.

The porosity of the heat-resistant porous layer is preferably 30% or more from the viewpoint of ion permeability of the separator, and is preferably 80% or less, more preferably 70% or less, still more preferably 60% or less, and further still more preferably 50% or less from the viewpoint of thermal dimensional stability of the separator. The porosity ε (%) of the heat-resistant porous layer is determined by the following formula.

$$\varepsilon = \{1 - (Wa/da + Wb/db + Wc/dc + ... + Wn/dn)/t\} \times 100$$

Here, the constituent materials of the heat-resistant porous layer are represented by a, b, c,..., n, the mass of each constituent material is represented by Wa, Wb, Wc,..., or Wn (g/cm²), the true density of each constituent material is represented by da, db, dc,..., or dn (g/cm³), and the thickness of the heat-resistant porous layer is represented by t (cm).

The average pore size of the heat-resistant porous layer is preferably from 10 nm to 200 nm. In a case where the average pore size is 10 nm or more, when the heat-resistant porous layer is impregnated with an electrolytic solution, the pores are hardly blocked even if a resin contained in the heat-resistant porous layer swells. In a case where the average pore size is 200 nm or less, uniformity in ion transfer is high, and a battery has excellent cycle characteristics and load characteristics.

The average pore size (nm) of the heat-resistant porous layer is calculated by the following formula, assuming that all pores are cylindrical.

$$d = 4\, V/S$$

In the formula, d represents an average pore size (diameter) of the heat-resistant porous layer, V represents a pore volume per square meter of the heat-resistant porous layer, and S represents a pore surface area per square meter of the heat-resistant porous layer.

The pore volume V per square meter of the heat-resistant porous layer is calculated from the porosity of the heat-resistant porous layer.

The pore surface area S per square meter of the heat-resistant porous layer is determined by the following method.

First, a specific surface area (m²/g) of the porous substrate and a specific surface area (m²/g) of the separator are calculated from a nitrogen gas adsorption amount by applying a BET formula to a nitrogen gas adsorption method. These specific surface areas (m²/g) are multiplied by basis weights (g/m²) of the porous substrate and the separator, respectively, to calculate a pore surface area per square meter. Then, the pore surface area per square meter of the porous substrate is subtracted from the pore surface area per square meter of the separator to calculate the pore surface area S per square meter of the heat-resistant porous layer.

The peel strength between the porous substrate and the heat-resistant porous layer is preferably 0.1 N/10 mm or more, more preferably 0.2 N/10 mm, and still more preferably 0.3 N/10 mm from the viewpoint of the adhesive strength of the separator to an electrode. A higher peel strength between the porous substrate and the heat-resistant porous layer is more preferable from the above viewpoint. However, the peel strength is usually 2 N/10 mm or less. In a case where the separator of the present disclosure has heat-resistant porous layers on both sides of the porous substrate, the peel strength between the porous substrate and each of the heat-resistant porous layers is preferably in the above range on both sides of the porous substrate.

-Characteristics of Separator-

The thickness of the separator of the present disclosure is preferably 5 μm or more, and more preferably 10 μm or more from the viewpoint of the mechanical strength of the separator, and is preferably 25 μm or less, and more preferably 20 μm or less from the viewpoint of the energy density of a battery.

The puncture strength of the separator of the present disclosure is preferably from 250 g to 1000 g, and more preferably from 300 g to 600 g from the viewpoint of the mechanical strength of the separator or the short-circuit resistance of a battery. A method of measuring the puncture strength of the separator is similar to a method of measuring the puncture strength of the porous substrate.

The porosity of the separator of the present disclosure is preferably from 30% to 60% from the viewpoint of adhesiveness to an electrode, the handleability of the separator, the ion permeability thereof, or the mechanical strength thereof.

The separator of the present disclosure has a Gurley value (JIS P8117: 2009) of preferably from 50 seconds/100 mL to 800 seconds/100 mL, more preferably from 100 seconds/100 mL to 400 seconds/100 mL from the viewpoint of a balance between mechanical strength and ion permeability.

The separator of the present disclosure has, as a value obtained by subtracting a Gurley value of the porous substrate from a Gurley value of the separator, preferably 300 seconds/100 mL or less, more preferably 150 seconds/100 mL or less, still more preferably 100 seconds/100 mL or less from the viewpoint of ion permeability. A lower limit of the value obtained by subtracting a Gurley value of the porous substrate from a Gurley value of the separator is not particularly limited, but is usually 10 seconds/100 mL or more in the separator of the present disclosure.

The separator of the present disclosure preferably has a film resistance of from 1 $\Omega\cdot cm^2$ to 10 $\Omega\cdot cm^2$ from the viewpoint of load characteristics of a battery. Here, the film resistance of the separator refers to a resistance value in a state where the separator is impregnated with an electrolytic solution, and is measured by an AC method at 20°C using 1 mol/L $LiBF_4$-propylene carbonate/ethylene carbonate (mass ratio 1/1) as the electrolytic solution. The separator with a lower film resistance value has better ion permeability.

The separator of the present disclosure preferably has a tortuosity ratio of from 1.5 to 2.5 from the viewpoint of ion permeability.

The amount of water (based on mass) contained in the separator of the present disclosure is preferably 1000 ppm or less. With a smaller amount of water in the separator, a reaction between an electrolytic solution and water can be further suppressed, and generation of gas in a battery can be further suppressed to improve the cycle characteristics of the battery in a case where the battery is formed. The amount of water contained in the separator is more preferably 800 ppm or less, and still more preferably 500 ppm or less from this viewpoint.

In the separator of the present disclosure, the ionic material is preferably contained in an amount of more than 0 $\mu$mol/g and 25 $\mu$mol/g or less per unit mass of the separator. It is preferable that the separator contains an ionic material in an amount of more than 0 $\mu$mol/g from the viewpoint of improving the productivity, and from such a viewpoint, the content is more preferably 1.0 $\mu$mol/g or more, still more preferably 1.5 $\mu$mol/g or more, and particularly preferably 2.0 $\mu$mol/g or more. The separator preferably contains 25.0 $\mu$mol/g or less of the ionic material from the viewpoint of the film resistance, and from such a viewpoint, the content is more preferably 22.5 $\mu$mol/g or less, and still more preferably 20 $\mu$mol/g or less.

The amount of the ionic material in the separator can be quantified by ICP mass spectrometry using ICP-MS Agilent7500cs (prepared by Agilent Technologies). In this case, for example, when the element content of a part of the constituent elements of the ionic material is quantified by the ICP mass spectrometry, the material amount of the ionic material per unit mass of the separator can be obtained by dividing the quantitative result by the atomic weight of the detected element.

The separator of the present disclosure has a shrinkage ratio, when heat-treated at 135°C for 1 hour, in an MD direction of preferably 30% or less, more preferably 20% or less, still more preferably 15% or less, still more preferably 10% or less, and particularly preferably 0%.

The separator of the present disclosure has a shrinkage ratio, when heat-treated at 135°C for 1 hour, in a TD direction of preferably 30% or less, more preferably 20% or less, still more preferably 15% or less, still more preferably 10% or less, and particularly preferably 0%.

The separator of the present disclosure has an area shrinkage ratio, when heat-treated at 135°C for 1 hour, of preferably 30% or less, more preferably 20% or less, still more preferably 15% or less, still more preferably 10% or less, and particularly preferably 0%.

The separator of the present disclosure has a shrinkage ratio, when heat-treated at 150°C for 1 hour, in an MD direction of preferably 70% or less, more preferably 55% or less, still more preferably 45% or less, still more preferably 20% or less, and still more preferably 10% or less.

The separator of the present disclosure has a shrinkage ratio, when heat-treated at 150°C for 1 hour, in a TD direction of preferably 70% or less, more preferably 55% or less, still more preferably 45% or less, still more preferably 20% or less, and still more preferably 10% or less.

The separator of the present disclosure has an area shrinkage ratio, when heat-treated at 150°C for 1 hour, of preferably 70% or less, more preferably 55% or less, still more preferably 45% or less, still more preferably 20% or less, and still more preferably 10% or less.

The area shrinkage ratio when the separator is heated at 135°C or 150°C for one hour is determined by the following measuring method.

The separator is cut out into a rectangle of 180 mm in an MD direction × 60 mm in a TD direction to prepare a test piece. This test piece is marked at points of 20 mm and 170 mm from one end on a line bisecting the test piece in a TD direction (referred to as points A and B, respectively). Furthermore, the test piece is marked at points of 10 mm and 50 mm from one end on a line bisecting the test piece in an MD direction (referred to as points C and D, respectively). A clip is attached to the marked test piece (a point where the clip is attached is between the point A and an end closest to the point A). The test piece is hung in an oven in which the temperature is adjusted to 135°C or 150°C to be heated under no tension for one hour. A length between A and B and a length between C and D are measured before and after the heat treatment, and an area shrinkage ratio is calculated by the following formula.

$$\text{Area shrinkage ratio (\%)} = \{1 - (\text{length between A and B after heat treatment} \div \text{length between A and B before heat treatment}) \times (\text{length between C and D after heat treatment} \div \text{length between C and D before heat treatment})\} \times 100$$

The separator of the present disclosure may further have a layer other than the porous substrate and the heat-resistant porous layer. Examples of the other layer include an adhesive layer provided as an outermost layer mainly for the purpose of bonding to an electrode.

-Method of Producing Separator-

The separator of the present disclosure can be produced, for example, by forming the heat-resistant porous layer on the porous substrate by a wet coating method or a dry coating method. In the present disclosure, the wet coating method is a method of solidifying a coating layer in a coagulation liquid, and the dry coating method is a method of drying a coating layer to solidify the coating layer.

The separator of the present disclosure is produced by, preferably, a method for producing a separator for a non-aqueous secondary battery including the process of: preparing a coating solution in which a wholly aromatic polyamide, inorganic particles and an ionic material are dissolved or dispersed in an aprotic polar solvent; coating the coating solution onto a porous substrate to form a coating layer on one side or on both sides of the porous substrate; and solidifying the coating layer to form a heat-resistant porous layer on one side or on both sides of the porous substrate, in which an average primary particle diameter of the inorganic particles is from 0.02 $\mu$m to less than 0.1 $\mu$m, or in which the inorganic particles contain a metal sulfate or a metal hydroxide.

Hereinafter, embodiment examples of the wet coating method will be described.

The wet coating method may be a method in which a coating liquid containing a wholly aromatic polyamide, inorganic particles, and an ionic material is applied onto a porous substrate, the porous substrate is immersed in a coagulation liquid to solidify the coating layer, and the coating layer is pulled out of the coagulation liquid, washed with water, and dried. In this case, as a form of use of the inorganic particles, similarly to the separator of the present disclosure, there are a first aspect in which it is important that the average primary particle diameter of the inorganic particles is from 0.02 $\mu$m to less than 0.1 $\mu$m and a second aspect in which it is important that the inorganic particles contain a metal sulfate or a metal hydroxide.

The present disclosure preferably includes a process of preparing a coating liquid in which a wholly aromatic polyamide, inorganic particles, and an ionic material are dissolved or dispersed in an aprotic polar solvent.

The coating liquid for forming the heat-resistant porous layer is prepared by dissolving or dispersing a wholly aromatic polyamide, inorganic particles, and an ionic material in a solvent. In the coating liquid, other components other than the wholly aromatic polyamide and the inorganic particles are dissolved or dispersed, if necessary.

A solvent used for preparing the coating liquid includes an aprotic polar solvent that dissolves the wholly aromatic polyamide (hereinafter, also referred to as "good solvent"). Examples of the good solvent include a polar amide solvent such as N-methylpyrrolidone, dimethylacetamide, or dimethylformamide.

The solvent used for preparing the coating liquid preferably contains a phase separation agent that induces phase separation from the viewpoint of forming a porous layer having a favorable porous structure. Therefore, the solvent used for preparing the coating liquid is preferably a mixed solvent of a good solvent and a phase separation agent. The phase separation agent is preferably mixed with a good solvent in such an amount that a viscosity suitable for coating can be ensured. Examples of the phase separation agent include water, methanol, ethanol, propyl alcohol, butyl alcohol, butanediol, ethylene glycol, propylene glycol, and tripropylene glycol.

The solvent used for preparing the coating liquid is preferably a mixed solvent of a good solvent and a phase separation agent, containing 60% by mass or more of the good solvent and 40% by mass or less of the phase separation agent from the viewpoint of forming a favorable porous structure.

The wholly aromatic polyamide concentration of the coating liquid is preferably from 1% by mass to 20% by mass from the viewpoint of forming a favorable porous structure. The inorganic particle concentration of the coating liquid is preferably from 2% by mass to 50% by mass from the viewpoint of forming a favorable porous structure.

The present disclosure preferably includes a process of applying a coating liquid to a porous substrate to form a coating layer on one side or both sides of the porous substrate.

Examples of the means for applying the coating liquid to the porous substrate include a Meyer bar, a die coater, a reverse roll coater, a roll coater, and a gravure coater. The heat-resistant porous layer can be formed on one side or both sides of the porous substrate, but when the heat-resistant porous layer is formed on both sides of the porous substrate, it is preferable from the viewpoint of productivity to simultaneously apply the coating liquid to the porous substrate on both sides.

In the present disclosure, it is preferable to include a process of solidifying the coating layer to form a heat-resistant porous layer on the porous substrate.

The solidification of the coating layer is performed by immersing the porous substrate on which the coating layer is formed in a coagulation liquid to solidify the wholly aromatic polyamide while inducing the phase separation in the coating layer. Thus, the laminated body including the porous substrate and the heat-resistant porous layer is obtained.

The coagulation liquid generally contains the good solvent and the phase separation agent used for preparing the coating liquid, and water. A mixing ratio between the good solvent and the phase separation agent is preferably matched with the mixing ratio of the mixed solvent used for preparing the coating liquid in terms of production. The content of water in the coagulation liquid is preferably from 40% by mass to 90% by mass from viewpoints of formation of a porous structure and productivity. The temperature of the coagulation liquid is, for example, from 20°C to 50°C.

After the coating layer is solidified in the coagulation liquid, the laminated body is pulled out of the coagulation liquid and washed with water. By washing the laminated body with water, the coagulation liquid is removed from the laminated body. Furthermore, by drying the laminated body, water is removed from the laminated body. Washing with water is performed, for example, by transporting the laminated body in a water washing bath. Drying is performed, for example, by transporting the laminated body in a high-temperature environment, blowing air to the laminated body, or bringing the laminated body into contact with a heat roll. The drying temperature is preferably from 40°C to 80°C.

The separator of the present disclosure can also be produced by a dry coating method. The dry coating method is a method of applying a coating liquid to a porous substrate, drying the coating layer to remove a solvent by evaporation, and thereby forming a heat-resistant porous layer on the porous substrate.

The separator of the present disclosure can also be produced by a method of preparing a heat-resistant porous layer as an independent sheet, stacking the heat-resistant porous layer on a porous substrate, and forming a composite by thermal press bonding or an adhesive. Examples of the method of preparing a heat-resistant porous layer as an independent sheet include a method of forming a heat-resistant porous layer on a release sheet by applying the above-described wet coating method or dry coating method.

<Non-aqueous secondary battery>

A non-aqueous secondary battery of the present disclosure is a non-aqueous secondary battery that obtains an electromotive force by doping/dedoping lithium, and includes a positive electrode, a negative electrode, and a separator for a non-aqueous secondary battery of the present disclosure. The doping means occlusion, support, adsorption, or insertion, and means a phenomenon that lithium ions enter an active material of an electrode such as a positive electrode.

The non-aqueous secondary battery of the present disclosure has a structure in which, for example, a battery element in which a negative electrode and a positive electrode face each other with a separator interposed therebetween is enclosed in an exterior material together with an electrolytic solution. The non-aqueous secondary battery of the present disclosure is suitable for a non-aqueous electrolyte secondary battery, particularly for a lithium ion secondary battery.

The non-aqueous secondary battery of the present disclosure has excellent safety because the separator of the present disclosure has excellent heat-resistance.

Hereinafter, aspect examples of the positive electrode, negative electrode, electrolyte solution, and exterior material included in the non-aqueous secondary battery according to the present disclosure will be described.

Examples of an embodiment of the positive electrode include a structure in which an active material layer containing a positive electrode active material and a binder resin is formed on a current collector. The active material layer may further contain a conductive auxiliary agent. Examples of the positive electrode active material include a lithium-containing transition metal oxide, and specific examples thereof include $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCo_{1/2}Ni_{1/2}O_2$, and $LiAl_{1/4}Ni_{3/4}O_2$. Examples of the binder resin include a polyvinylidene fluoride type resin, and a styrene-butadiene copolymer. Examples of the conductive auxiliary agent include carbon materials such as acetylene black, Ketjen black, and graphite powder. Examples of the current collector include an aluminum foil, a titanium foil, and a stainless steel foil, each having a thickness of from 5 $\mu$m to 20 $\mu$m.

In the non-aqueous secondary battery according to the present disclosure, the heat-resistant porous layer of the separator according to the present disclosure includes a wholly aromatic polyamide, since a wholly aromatic polyamide has excellent oxidation resistance, when the heat-resistant porous layer is disposed by contacting the positive electrode of the non-aqueous secondary battery, a positive electrode active material that can be operated at a high voltage of 4.2 V or more, such as $LiMn_{1/2}Ni_{1/2}O_2$ and $LiCo_{1/3}Mn_{1/3}Ni_{1/3}O_2$, can be easily applicable.

Examples of an embodiment of the negative electrode include a structure in which an active material layer containing a negative electrode active material and a binder resin is formed on a current collector. The active material layer may further contain a conductive auxiliary agent. Examples of the negative electrode active material include materials capable of electrochemically occluding lithium. Specific examples thereof include carbon materials; and alloys of lithium in combination with silicon, tin, aluminum; wood's alloy, or the like. Examples of the binder resin include a polyvinylidene fluoride type resin and a styrene-butadiene copolymer. Examples of the conductive auxiliary agent include carbon materials such as acetylene black, Ketjen black, and graphite powder. Examples of the current collector include a copper foil, a nickel foil, and a stainless steel foil, each having a thickness of from 5 $\mu$m to 20 $\mu$m. Instead of using the negative electrode described above, a metal lithium foil may be used as the negative electrode.

The electrolyte solution is, for example, a solution in which a lithium salt is dissolved in a non-aqueous solvent. Examples of the lithium salt include $LiPF_6$, $LiBF_4$, and $LiClO_4$. Examples of the non-aqueous solvent include cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as $\gamma$-butyrolactone and $\gamma$-valerolactone. These non-aqueous solvent may be used singly, or in combination. As the electrolyte solution, a solution is preferred, which is obtained by mixing a cyclic carbonate and a chain carbonate at a mass ratio (cyclic carbonate : chain carbonate) of from 20 : 80 to 40 : 60, and dissolving a lithium salt therein to give a concentration of from 0.5 mol/L to 1.5 mol/L.

Examples of the exterior material include a metal can and an aluminum laminated film pack. The shape of the battery may be a square shape, a cylindrical shape, a coin shape, and the like, but the separator of the present disclosure is suitable for any one of these shapes.

EXAMPLES

Hereinafter, the separator and the non-aqueous secondary battery of the present disclosure will be described more specifically with reference to Examples. Materials, used amounts, ratios, treatment procedures, and the like illustrated in the following Examples can be changed, if appropriate without departing from the scope of the present disclosure. Therefore, the range of the separator and the non-aqueous secondary battery of the present disclosure should not be construed as being limited by the specific examples described below.

<Measurement Method and Evaluation Method>

The measurement methods and evaluation methods applied in the examples of the invention and comparative examples are as follows.

[Amount of Ionic Material in Separator]

For the separators produced in the following Examples and Comparative Examples, the amount of ionic material per unit mass was determined by performing quantitative analysis of an element by ICP mass spectrometry (ICP-MS method) using Agilent7500cs prepared by Agilent Technologies, Inc., and dividing the quantitative result by the atomic weight of the detected element.

[Average Primary Particle Diameter of Inorganic Particle]

The inorganic particles before being added to the coating liquid for forming the heat-resistant porous layer were used as samples.

The average primary particle diameter of the inorganic particles was determined according to the following formula by measuring the specific gravity (g/cm$^3$) and the BET specific surface area (m$^2$/g), and assuming that the inorganic particles were true spheres. As an apparatus for measuring the BET specific surface area, ASAP 2020 manufactured by Micromeritics was used.

$$\text{Average primary particle diameter } (\mu m) = 6 \div [\text{specific gravity } (g/cm^3) \times \text{BET}$$

$$\text{specific surface area } (m^2/g)]$$

[Thicknesses of Porous Substrate and Separator]

Each of the thicknesses ($\mu$m) of the porous substrate and the separator was determined by measuring thicknesses at 20 points with a contact-type thickness gauge (Mitutoyo Corporation, LITEMATIC VL-50) and averaging the measured values. As a measuring terminal, a cylindrical terminal having a diameter of 5 mm was used, and adjustment was performed such that a load of 0.01 N was applied during the measurement.

[Thickness of Heat-resistant Porous Layer]

The thickness of the heat-resistant porous layer (total thickness thereof on both sides, $\mu$m) was determined by subtracting the thickness of the porous substrate ($\mu$m) from the thickness of the separator ($\mu$m).

[Mass of Heat-resistant Porous Layer]

The separator was cut into a size of 10 cm $\times$ 10 cm, the mass thereof was measured, and the mass was divided by the area thereof to determine the basis weight (g/m$^2$) of the separator. The porous substrate used for producing the separator was cut into a size of 10 cm $\times$ 10 cm, the mass thereof was measured, and the mass was divided by the area thereof to determine the basis weight (g/m$^2$) of the porous substrate. The basis weight of the porous substrate was subtracted from the basis weight of the separator to determine the mass of the heat-resistant porous layer per unit area (total mass thereof on both sides, g/m$^2$).

[Porosity of Porous Substrate]

The porosity $\varepsilon$ (%) of the porous substrate was determined by the following formula.

$$\varepsilon = \{1 - Ws/(ds \cdot t)\} \times 100$$

Ws: basis weight of porous substrate (g/m$^2$), ds: true density of porous substrate (g/cm$^3$), t: thickness of porous substrate (cm).

[Porosity of Heat-resistant Porous Layer]

The porosity $\varepsilon$ (%) of the heat-resistant porous layer was determined by the following formula.

$$\varepsilon = \{1 - (Wa/da + Wb/db + Wc/dc +...+ Wn/dn)/t\} \times 100$$

Here, the constituent materials of the heat-resistant porous layer are represented by a, b, c,..., n, the mass of each constituent material is represented by Wa, Wb, Wc,..., or Wn (g/cm$^2$), the true density of each constituent material is represented by da, db, dc,..., or dn (g/cm$^3$), and the thickness of the heat-resistant porous layer is represented by t (cm).

[Gurley Value]

The Gurley value (sec/100 ml) of each of the porous substrate and the separator was measured with a Gurley type densometer (G-B2C manufactured by Toyo Seiki Seisaku-sho, Ltd.) in accordance with JIS P8117 (2009).

[Area Shrinkage Ratio by Heat Treatment]

The separator was cut out into 180 mm in an MD direction $\times$ 60 mm in a TD direction to prepare a test piece. This test piece was marked at points of 20 mm and 170 mm from one end on a line bisecting the test piece in a TD direction (referred to as points A and B, respectively). Furthermore, the test piece was marked at points of 10 mm and 50 mm from one end on a line bisecting the test piece in an MD direction (referred to as points C and D, respectively).

A clip was attached to the test piece (a point where the clip was attached was between the point A and an end closest to the point A). The test piece was hung in an oven in which the temperature was adjusted to 120°C, 135°C, or 150°C to be heated under no tension for one hour. A length between A and B and a length between C and D were measured before and after the heat treatment, and an area shrinkage ratio was calculated by the following formula. Furthermore, the area shrinkage ratios of the ten test pieces were averaged.

$$\text{Area shrinkage ratio (\%)} = \{1 - (\text{length between A and B after heat treatment} \div \text{length between A and B before heat treatment}) \times (\text{length between C and D after heat treatment} \div \text{length between C and D before heat treatment})\} \times 100$$

[Spot Heating]

The separator was cut out into 50 mm in an MD direction × 50 mm in a TD direction to prepare a test piece. The test piece was placed on a horizontal table. A soldering iron having a tip diameter of 2 mm was heated such that the temperature of the tip was 260°C. In this state, the tip of the soldering iron was brought into point contact with a side of the separator for 60 seconds. The area ($mm^2$) of holes formed in the separator by point contact was measured, and the areas of holes of the ten test pieces were averaged. The higher the heat resistance of the separator is, the smaller the area of holes formed in the separator is.

[Amount of Generation of Gas]

The produced test cell was placed in an environment at a temperature of 85°C for 20 days, and the volume of the test cell was measured before and after the heat treatment. The amount of generation of gas V (= V2 - V1, unit: mL) was determined by subtracting the volume V1 of the test cell before the heat treatment from the volume V2 of the test cell after the heat treatment. Furthermore, the amounts of generation of gas V of the ten test cells were averaged.

[Viscosity of Coating Liquid]

The viscosity of the coating liquid containing the wholly aromatic polyamide, the inorganic particles, and the ionic material was measured by the following procedure, and used as an index for evaluating the productivity of the separator.
The viscosity at a spindle rotation speed of 10 rpm was measured using a measuring spindle (SC4-18) with a B-type viscometer (DV-I PRIME produced by Brookfield). Note that viscosity measurement was performed while the liquid temperature of the coating liquid was maintained at 20°C using a thermostatic bath.
The relative viscosity of the coating liquid was calculated by the following formula based on the viscosity of the coating liquid of Comparative Example 3.

$$\text{Relative viscosity of coating liquid} = \{(\text{viscosity of coating liquid of each of Examples and Comparative Examples})/(\text{viscosity of coating liquid of Comparative Example 3})\} \times 100$$

[Content Ratio (Volume Ratio) of Inorganic Particles]

The content ratio (volume ratio Va (%)) of the inorganic particles to the total solid content of the wholly aromatic polyamide and the inorganic particles in the heat-resistant porous layer was determined by the following formula.

$$Va = \{(Xa/Da)/(Xa/Da + Xb/Db + Xc/Dc + ... + Xn/Dn)\} \times 100$$

Here, among the constituent materials of the heat-resistant porous layer, the inorganic particles are a, other constituent materials are b, c,..., and n, masses of the respective constituent materials are Xa, Xb, Xc,..., and Xn (g), and true densities of the respective constituent materials are Da, Db, Dc,..., and Dn ($g/cm^3$).

[Example 1]

<Production of separator>

The meta-wholly aromatic polyamide was dissolved in a mixed solvent (DMAc : TPG = 80 : 20 [mass ratio]) of dimethylacetamide (DMAc; aprotic polar solvents) and tripropylene glycol (TPG; phase separation agent) to have 4% by mass of resin concentration, and further, at the same temperature, barium sulfate particles (average primary particle diameter: 0.05 $\mu$m) and 10% by mass of calcium chloride dihydrate (ionic material) based on the resin amount were stirred and mixed to obtain a coating liquid (A). At this time, the calcium chloride dihydrate was completely dissolved in the mixed solvent.

An appropriate amount of the coating liquid (A) was placed on the Meyer bar, and the coating liquid (A) was applied to both sides of a polyethylene microporous film (thickness 9 $\mu$m, porosity 36%, and Gurley value 168 seconds/100 mL). This was immersed in a coagulation liquid (DMAc : TPG : water = 30 : 8 : 62 [mass ratio] and liquid temperature 40°C) to solidify the coating layer, then washed in a water washing tank having a water temperature of 40°C, and dried. In this way, a separator in which a heat-resistant porous layer was formed on both sides of a polyethylene microporous film was obtained.

<Preparation of secondary battery>

The obtained separator was cut into a size of 600 cm$^2$ and placed in an aluminum laminate film pack, and an electrolytic solution was injected into the pack to impregnate the separator with the electrolytic solution. The pack was sealed to obtain a test cell. As the electrolytic solution, 1 mol/L LiPF$_6$-ethylene carbonate/ethyl methyl carbonate (3/7 [mass ratio]; produced by Kishida Chemical Co., Ltd.).

<Measurement and evaluation>

The separator and the test cell (secondary battery) were measured and evaluated according to the measurement method and the evaluation method described above. The measurement and evaluation results are shown in Table 1.

[Example 2]

A separator was prepared in a manner similar to Example 1 except that the barium sulfate particles were changed to other barium sulfate particles (average primary particle diameter: 0.03 $\mu$m).

[Example 3]

A separator was prepared in a manner similar to Example 1 except that the barium sulfate particles were changed to other barium sulfate particles (average primary particle diameter: 0.09 $\mu$m).

[Examples 4 to 6]

A separator was prepared in a manner similar to Example 1 except that the volume ratio of barium sulfate particles was changed as shown in Table 1.

[Example 7]

A separator was prepared in a manner similar to Example 1 except that the amount of calcium chloride dihydrate was changed to 100% by mass with respect to the amount of the resin.

[Example 8]

A separator was prepared in a manner similar to Example 1 except that the barium sulfate particles were changed to magnesium hydroxide particles (average primary particle diameter: 0.05 $\mu$m).

[Example 9]

A separator was prepared in a manner similar to Example 1 except that calcium chloride dihydrate was changed to lithium chloride.

[Example 10]

A separator was prepared in a manner similar to Example 1 except that the meta-wholly aromatic polyamide was changed to the para-wholly aromatic polyamide.

[Comparative Example 1]

A separator was prepared in a manner similar to Example 1 except that the barium sulfate particles were changed to alumina particles (average primary particle diameter: 0.013 $\mu$m).

[Comparative Example 2]

A separator was prepared in a manner similar to Example 1 except that the barium sulfate particles were changed to alumina particles (average primary particle diameter: 0.1 $\mu$m).

[Comparative Example 3]

The meta-wholly aromatic polyamide was dissolved in a mixed solvent of dimethylacetamide (DMAc) and tripropylene glycol (TPG) (DMAc : TPG = 80 : 20 [mass ratio]) so as to have 4% by mass of resin concentration, and barium sulfate particles (average primary particle diameter: 0.05 $\mu$m) were further stirred and mixed to obtain a coating liquid (B).
An appropriate amount of the coating liquid (B) was placed on the Meyer bar, and the coating liquid (B) was applied to both sides of a polyethylene microporous film (thickness 9 $\mu$m, porosity 36%, and Gurley value 168 seconds/100 mL). This was immersed in a coagulation liquid (DMAc : TPG : water = 30 : 8 : 62 [mass ratio] and liquid temperature 40°C) to solidify the coating layer, then washed in a water washing tank having a water temperature of 40°C, and dried. In this way, a separator in which a heat-resistant porous layer was formed on both sides of a polyethylene microporous film was obtained.

[Comparative Example 4]

A separator was prepared in a manner similar to Comparative Example 3 except that the barium sulfate particles were changed to other barium sulfate particles (average primary particle diameter: 0.03 $\mu$m).

[Comparative Example 5]

A separator was prepared in a manner similar to Comparative Example 3 except that the barium sulfate particles were changed to magnesium hydroxide particles (average primary particle diameter: 0.05 $\mu$m).

EP 3 920 299 B1

[Table 1]

| | Heat-resistant porous layer | | | | | | | | | Separator | | | | | | | | |
| | Binder resin | Inorganic particle | | | Ionic material | | | Thick-ness (Total on both sides) [μm] | Mass (Total on both sides) [g/m²] | Porosity | Ionic material | Thick-ness [μm] | Spot heating hole area [mm²] | Relative viscosity of coating liquid | Gurley [sec/100 mL] | Area shrinkage ratio | | | Gas generation Amount [mL] |
| | Kind | Kind | Average Primary Particle Size [μm] | Content Ratio [volume %]*1 | Kind | Coating | | | | | Material amount per unit mass [μmol/g] | | | | | 120°C | 135°C | 150°C | |
| Example 1 | Meta-aramid | BaSO₄ | 0.05 | 55 | CaCl₂ | Both sides | 2 | 3.7 | 50 | 2.3 | 11 | 2.5 | 35 | 225 | 3 | 6 | 10 | 2 |
| Example 2 | Meta-aramid | BaSO₄ | 0.03 | 55 | CaCl₂ | Both sides | 2 | 3.7 | 49 | 2.2 | 11 | 2.3 | 43 | 232 | 2 | 5 | 8 | 2 |
| Example 3 | Meta-aramid | BaSO₄ | 0.09 | 55 | CaCl₂ | Both sides | 2 | 3.6 | 50 | 2.3 | 11 | 2.4 | 30 | 220 | 3 | 7 | 12 | 2 |
| Example 4 | Meta-aramid | BaSO₄ | 0.05 | 30 | CaCl₂ | Both sides | 2 | 2.4 | 60 | 2.6 | 11 | 3.9 | 16 | 219 | 4 | 12 | 19 | 2 |
| Example 5 | Meta-aramid | BaSO₄ | 0.05 | 40 | CaCl₂ | Both sides | 2 | 3.2 | 54 | 2.5 | 11 | 2.5 | 28 | 215 | 5 | 11 | 17 | 2 |
| Example 6 | Meta-aramid | BaSO₄ | 0.05 | 70 | CaCl₂ | Both sides | 2 | 4.9 | 35 | 2.2 | 11 | 2.6 | 45 | 216 | 3 | 4 | 9 | 2 |
| Example 7 | Meta-aramid | BaSO₄ | 0.05 | 55 | CaCl₂ | Both sides | 2 | 3.8 | 50 | 22.4 | 11 | 2.6 | 34 | 231 | 3 | 6 | 11 | 2 |
| Example 8 | Meta-aramid | Mg(OH)₂ | 0.05 | 55 | CaCl₂ | Both sides | 2 | 2.0 | 53 | 2.4 | 11 | 2.4 | 45 | 230 | 2 | 7 | 11 | 16 |
| Example 9 | Meta-aramid | BaSO₄ | 0.05 | 55 | LiCl | Both sides | 2 | 3.8 | 52 | 2.5 | 11 | 2.6 | 50 | 231 | 3 | 6 | 8 | 2 |
| Example 10 | Para-aramid | BaSO₄ | 0.05 | 55 | CaCl₂ | Both sides | 2 | 3.6 | 53 | 3.1 | 11 | 2.6 | 37 | 221 | 3 | 7 | 9 | 2 |
| Comparative Example 1 | Meta-aramid | Alumina | 0.013 | 55 | CaCl₂ | Both sides | 2 | 3.1 | 51 | 2.5 | 11 | 4.5 | 275 | 218 | 4 | 13 | 24 | 18 |

| | Heat-resistant porous layer | | | | | | | | | Separator | | | | | | | | |
|---|---|---|---|---|---|---|---|---|---|---|---|---|---|---|---|---|---|---|
| | Binder resin | Inorganic particle | | | Ionic material | | | | | Ionic material | | | | | Area shrinkage ratio | | | |
| | Kind | Kind | Average Primary Particle Size [μm] | Content Ratio [volume %]*1 | Kind | Coating | Thickness (Total on both sides) [μm] | Mass (Total on both sides) [g/m²] | Porosity | Material amount per unit mass [μmol/g] | Thickness [μm] | Spot heating hole area [mm²] | Relative viscosity of coating liquid | Gurley [sec/100 mL] | 120°C | 135°C | 150°C | Gas generation Amount [mL] |
| Comparative Example 2 | Meta-aramid | Alumina | 0.1 | 55 | CaCl₂ | Both sides | 2 | 3.0 | 52 | 2.6 | 11 | 5.0 | 29 | 210 | 4 | 14 | 28 | 17 |
| Comparative Example 3 | Meta-aramid | BaSO₄ | 0.05 | 55 | - | Both sides | 2 | 3.2 | 53 | - | 11 | 2.3 | 100 | 219 | 2 | 5 | 9 | 2 |
| Comparative Example 4 | Meta-aramid | BaSO₄ | 0.03 | 55 | - | Both sides | 2 | 3.5 | 51 | - | 11 | 2.3 | 300 | 220 | 2 | 5 | 8 | 2 |
| Comparative Example 5 | Meta-aramid | Mg(OH)₂ | 0.05 | 55 | - | Both sides | 2 | 2.1 | 52 | - | 11 | 2.4 | 300 | 225 | 2 | 7 | 11 | 16 |

1: Content ratio of inorganic particles to the total amount of wholly aromatic polyamide and inorganic particles

EP 3 920 299 B1

As shown in Table 1, in Examples, the viscosity of the coating liquid was suppressed to be low as compared with Comparative Examples, and the productivity was faborable. That is, it can be seen that in Examples of the present disclosure, since the ionic material is used for the composition containing the wholly aromatic polyamide and the inorganic particles having a small particle size, a significant increase in viscosity is suppressed.

**Claims**

1. A separator for a non-aqueous secondary battery, the separator comprising:

   a porous substrate; and
   a heat-resistant porous layer that is formed on one side or on both sides of the porous substrate, and that contains a wholly aromatic polyamide, inorganic particles and an ionic material, wherein the ionic material is one or more selected from the group consisting of a metal nitrate, a metal chloride, a metal chlorate, a metal bromide, a metal iodide, a metal iodate, a metal perchlorate, and a metal fluoride; and
   wherein an average primary particle diameter of the inorganic particles is from 0.02 $\mu$m to less than 0.1 $\mu$m; wherein the average primary particle diameter is measured according to the method described in the description.

2. A separator for a non-aqueous secondary battery, the separator comprising:

   a porous substrate; and
   a heat-resistant porous layer that is formed on one side or on both sides of the porous substrate, and that contains a wholly aromatic polyamide, inorganic particles and an ionic material, wherein the ionic material is one or more selected from the group consisting of a metal nitrate, a metal chloride, a metal chlorate, a metal bromide, a metal iodide, a metal iodate, a metal perchlorate, and a metal fluoride; and
   wherein the inorganic particles include a metal sulfate or a metal hydroxide.

3. The separator for a non-aqueous secondary battery according to claim 1 or 2, wherein a content of the ionic material is more than 0 $\mu$mol/g and 25 $\mu$mol/g or less per unit mass of the separator for a non-aqueous secondary battery; wherein the content of the ionic material is measured according to the method described in the description.

4. The separator for a non-aqueous secondary battery according to any one of claims 1 to 3, wherein the inorganic particles are one or more selected from the group consisting of barium sulfate and magnesium hydroxide.

5. The separator for a non-aqueous secondary battery according to any one of claims 1 to 4, wherein the wholly aromatic polyamide is a meta-wholly aromatic polyamide.

6. The separator for a non-aqueous secondary battery according to any one of claims 1 to 5, wherein a content ratio of the inorganic particles in the heat-resistant porous layer is 30% by volume to 95% by volume with respect to a total amount of the wholly aromatic polyamide and the inorganic particles; wherein the content ratio of the inorganic particles in the heat-resistant porous layer is measured according to the method described in the description.

7. The separator for a non-aqueous secondary battery according to any one of claims 1 to 6, wherein a mass per unit area of the heat-resistant porous layer is from 1.0 g/m$^2$ to 30.0 g/m$^2$; wherein the mass per unit area of the heat-resistant porous layer is measured according to the method described in the description.

8. A non-aqueous secondary battery that obtains electromotive force by lithium doping and dedoping, the non-aqueous secondary battery comprising:

   a positive electrode;
   a negative electrode; and
   the separator for a non-aqueous secondary battery according to any one of claims 1 to 7, the separator being disposed between the positive electrode and the negative electrode.

9. A method of producing a separator for a non-aqueous secondary battery, the method comprising:

   preparing a coating solution in which a wholly aromatic polyamide, inorganic particles and an ionic material are dissolved or dispersed in an aprotic polar solvent; wherein the ionic material is one or more selected from the group consisting of a metal nitrate, a metal chloride, a metal chlorate, a metal bromide, a metal iodide, a metal iodate, a metal perchlorate, and a metal fluoride; and

coating the coating solution onto a porous substrate to form a coating layer on one side or on both sides of the porous substrate; and

solidifying the coating layer to form a heat-resistant porous layer on one side or on both sides of the porous substrate,

wherein an average primary particle diameter of the inorganic particles is from 0.02 $\mu$m to less than 0.1 $\mu$m; wherein the average primary particle diameter is measured according to the method described in the description.

10. A method of producing a separator for a non-aqueous secondary battery, the method comprising:

preparing a coating solution in which a wholly aromatic polyamide, inorganic particles and an ionic material are dissolved or dispersed in an aprotic polar solvent; wherein the ionic material is one or more selected from the group consisting of a metal nitrate, a metal chloride, a metal chlorate, a metal bromide, a metal iodide, a metal iodate, a metal perchlorate, and a metal fluoride; and

coating the coating solution onto a porous substrate to form a coating layer on one side or on both sides of the porous substrate; and

solidifying the coating layer to form a heat-resistant porous layer on one side or on both sides of the porous substrate,

wherein the inorganic particles include a metal sulfate or a metal hydroxide.

**Patentansprüche**

1. Separator für eine nichtwässrige Sekundärbatterie, wobei der Separator Folgendes umfasst:

ein poröses Substrat und

eine wärmebeständige poröse Schicht, die auf einer Seite oder auf beiden Seiten des porösen Substrats ausgebildet ist und die ein vollaromatisches Polyamid, anorganische Teilchen und ein ionisches Material enthält, wobei es sich bei dem ionischen Material um eines oder mehrere aus der Gruppe bestehend aus einem Metallnitrat, einem Metallchlorid, einem Metallchlorat, einem Metallbromid, einem Metalliodid, einem Metalliodat, einem Metallperchlorat und einem Metallfluorid handelt; und

wobei der durchschnittliche Primärteilchendurchmesser der anorganischen Teilchen 0,02 $\mu$m bis weniger als 0,1 $\mu$m beträgt; wobei der durchschnittliche Primärteilchendurchmesser gemäß der in der Beschreibung beschriebenen Methode gemessen wird.

2. Separator für eine nichtwässrige Sekundärbatterie, wobei der Separator Folgendes umfasst:

ein poröses Substrat und

eine wärmebeständige poröse Schicht, die auf einer Seite oder auf beiden Seiten des porösen Substrats ausgebildet ist und die ein vollaromatisches Polyamid, anorganische Teilchen und ein ionisches Material enthält, wobei es sich bei dem ionischen Material um eines oder mehrere aus der Gruppe bestehend aus einem Metallnitrat, einem Metallchlorid, einem Metallchlorat, einem Metallbromid, einem Metalliodid, einem Metalliodat, einem Metallperchlorat und einem Metallfluorid handelt; und

wobei die anorganischen Teilchen ein Metallsulfat oder ein Metallhydroxid umfassen.

3. Separator für eine nichtwässrige Sekundärbatterie nach Anspruch 1 oder 2, wobei der Gehalt des ionischen Materials mehr als 0 $\mu$mol/g und 25 $\mu$mol/g oder weniger pro Masseneinheit des Separators für eine nichtwässrige Sekundärbatterie beträgt; wobei der Gehalt des ionischen Materials gemäß der in der Beschreibung beschriebenen Methode gemessen wird.

4. Separator für eine nichtwässrige Sekundärbatterie nach einem der Ansprüche 1 bis 3, wobei es sich bei den anorganischen Teilchen um eines oder mehrere aus der Gruppe bestehend aus Bariumsulfat und Magnesiumhydroxid handelt.

5. Separator für eine nichtwässrige Sekundärbatterie nach einem der Ansprüche 1 bis 4, wobei es sich bei dem vollaromatischen Polyamid um ein vollaromatisches Polyamid vom meta-Typ handelt.

**6.** Separator für eine nichtwässrige Sekundärbatterie nach einem der Ansprüche 1 bis 5, wobei der Gehaltsanteil der anorganischen Teilchen in der wärmebeständigen porösen Schicht 30 Vol.-% bis 95 Vol.-%, bezogen auf die Gesamtmenge des vollaromatischen Polyamids und der anorganischen Teilchen, beträgt; wobei der Gehaltsanteil der anorganischen Teilchen in der wärmebeständigen porösen Schicht gemäß der in der Beschreibung beschriebenen Methode gemessen wird.

**7.** Separator für eine nichtwässrige Sekundärbatterie nach einem der Ansprüche 1 bis 6, wobei eine Masse pro Flächeneinheit der wärmebeständigen porösen Schicht 1,0 g/m² bis 30,0 g/m² beträgt; wobei die Masse pro Flächeneinheit der wärmebeständigen porösen Schicht gemäß der in der Beschreibung beschriebenen Methode gemessen wird.

**8.** Nichtwässrige Sekundärbatterie, die durch Lithium-Dotieren und -Entdotieren elektromotorische Kraft erhält, wobei die nichtwässrige Sekundärbatterie Folgendes umfasst:

eine positive Elektrode;
eine negative Elektrode und
den Separator für eine nichtwässrige Sekundärbatterie nach einem der Ansprüche 1 bis 7, wobei der Separator zwischen der positiven Elektrode und der negativen Elektrode angeordnet ist.

**9.** Verfahren zur Herstellung eines Separators für eine nichtwässrige Sekundärbatterie, wobei das Verfahren Folgendes umfasst:

Herstellen eines Beschichtungslösungsmittels, in dem ein vollaromatisches Polyamid, anorganische Teilchen und ein ionisches Material in einem aprotischen polaren Lösungsmittel gelöst oder dispergiert sind; wobei es sich bei dem ionischen Material um eines oder mehrere aus der Gruppe bestehend aus einem Metallnitrat, einem Metallchlorid, einem Metallchlorat, einem Metallbromid, einem Metalliodid, einem Metalliodat, einem Metallperchlorat und einem Metallfluorid handelt; und
Auftragen der Beschichtungslösung auf ein poröses Substrat zur Bildung einer Beschichtungsschicht auf einer Seite oder auf beiden Seiten des porösen Substrats und
Verfestigen der Beschichtungsschicht zur Bildung einer wärmebeständigen porösen Schicht auf einer Seite oder auf beiden Seiten des porösen Substrats, wobei der durchschnittliche Primärteilchendurchmesser der anorganischen Teilchen 0,02 μm bis weniger als 0,1 μm beträgt; wobei der durchschnittliche Primärteilchendurchmesser gemäß der in der Beschreibung beschriebenen Methode gemessen wird.

**10.** Verfahren zur Herstellung eines Separators für eine nichtwässrige Sekundärbatterie, wobei das Verfahren Folgendes umfasst:

Herstellen eines Beschichtungslösungsmittels, in dem ein vollaromatisches Polyamid, anorganische Teilchen und ein ionisches Material in einem aprotischen polaren Lösungsmittel gelöst oder dispergiert sind; wobei es sich bei dem ionischen Material um eines oder mehrere aus der Gruppe bestehend aus einem Metallnitrat, einem Metallchlorid, einem Metallchlorat, einem Metallbromid, einem Metalliodid, einem Metalliodat, einem Metallperchlorat und einem Metallfluorid handelt; und
Auftragen der Beschichtungslösung auf ein poröses Substrat zur Bildung einer Beschichtungsschicht auf einer Seite oder auf beiden Seiten des porösen Substrats und
Verfestigen der Beschichtungsschicht zur Bildung einer wärmebeständigen porösen Schicht auf einer Seite oder auf beiden Seiten des porösen Substrats, wobei die anorganischen Teilchen ein Metallsulfat oder ein Metallhydroxid umfassen.

**Revendications**

**1.** Séparateur pour une batterie secondaire non aqueuse, le séparateur comprenant :

un substrat poreux ; et
une couche poreuse thermorésistante qui est formée sur un côté ou sur les deux côtés du substrat poreux, et qui contient un polyamide totalement aromatique, des particules inorganiques et une matière ionique, la matière ionique étant l'un ou plusieurs choisis dans le groupe constitué par un nitrate métallique, un chlorure métallique, un chlorate métallique, un bromure métallique, un iodure métallique, un iodate métallique, un perchlorate métallique et un fluorure métallique ;
et
un diamètre moyen de particule primaire des particules inorganiques étant de 0,02 μm à moins de 0,1 μm ; le diamètre moyen de particule primaire étant mesuré selon le procédé décrit dans la description.

2. Séparateur pour une batterie secondaire non aqueuse, le séparateur comprenant :

un substrat poreux ; et
une couche poreuse thermorésistante qui est formée sur un côté ou sur les deux côtés du substrat poreux, et qui contient un polyamide totalement aromatique, des particules inorganiques et une matière ionique, la matière ionique étant l'un ou plusieurs choisis dans le groupe constitué par un nitrate métallique, un chlorure métallique, un chlorate métallique, un bromure métallique, un iodure métallique, un iodate métallique, un perchlorate métallique et un fluorure métallique ;
et
les particules inorganiques comprenant un sulfate métallique ou un hydroxyde métallique.

3. Séparateur pour une batterie secondaire non aqueuse selon la revendication 1 ou 2, une teneur de la matière ionique étant supérieure à 0 μmol/g et 25 μmol/g ou moins par unité de masse du séparateur pour une batterie secondaire non aqueuse ; la teneur de la matière ionique étant mesurée selon le procédé décrit dans la description.

4. Séparateur pour une batterie secondaire non aqueuse selon l'une quelconque des revendications 1 à 3, les particules inorganiques étant l'un ou plusieurs choisis dans le groupe constitué par le sulfate de baryum et l'hydroxyde de magnésium.

5. Séparateur pour une batterie secondaire non aqueuse selon l'une quelconque des revendications 1 à 4, le polyamide totalement aromatique étant un polyamide totalement méta-aromatique.

6. Séparateur pour une batterie secondaire non aqueuse selon l'une quelconque des revendications 1 à 5, un rapport de teneurs des particules inorganiques dans la couche poreuse thermorésistante étant de 30 % en volume à 95 % en volume par rapport à une quantité totale du polyamide totalement aromatique et des particules inorganiques ; le rapport de teneurs des particules inorganiques dans la couche poreuse thermorésistante étant mesuré selon le procédé décrit dans la description.

7. Séparateur pour une batterie secondaire non aqueuse selon l'une quelconque des revendications 1 à 6, une masse par unité de surface de la couche poreuse thermorésistante étant de 1,0 g/m$^2$ à 30,0 g/m$^2$ ; la masse par unité de surface de la couche poreuse thermorésistante étant mesurée selon le procédé décrit dans la description.

8. Batterie secondaire non aqueuse qui obtient une force électromotrice par dopage et dédopage de lithium, la batterie secondaire non aqueuse comprenant :

une électrode positive ;
une électrode négative ; et
le séparateur pour une batterie secondaire non aqueuse selon l'une quelconque des revendications 1 à 7, le séparateur étant disposé entre l'électrode positive et l'électrode négative.

9. Procédé de production d'un séparateur pour une batterie secondaire non aqueuse, le procédé comprenant :

la préparation d'une solution de revêtement dans laquelle un polyamide totalement aromatique, des particules inorganiques et une matière ionique sont dissous ou dispersés dans un solvant polaire aprotique ; la matière ionique étant l'un ou plusieurs choisis dans le groupe constitué par un nitrate métallique, un chlorure métallique, un chlorate métallique, un bromure métallique, un iodure métallique, un iodate métallique, un perchlorate métallique et un fluorure métallique ;
et
le revêtement de la solution de revêtement sur un substrat poreux pour former une couche de revêtement sur un côté ou sur les deux côtés du substrat poreux ; et
la solidification de la couche de revêtement pour former une couche poreuse thermorésistante sur un côté ou sur les deux côtés du substrat poreux,
un diamètre moyen de particule primaire des particules inorganiques étant de 0,02 μm à moins de 0,1 μm ; le

diamètre moyen de particule primaire étant mesuré selon le procédé décrit dans la description.

10. Procédé de production d'un séparateur pour une batterie secondaire non aqueuse, le procédé comprenant :

la préparation d'une solution de revêtement dans laquelle un polyamide totalement aromatique, des particules inorganiques et une matière ionique sont dissous ou dispersés dans un solvant polaire aprotique ; la matière ionique étant l'un ou plusieurs choisis dans le groupe constitué par un nitrate métallique, un chlorure métallique, un chlorate métallique, un bromure métallique, un iodure métallique, un iodate métallique, un perchlorate métallique et un fluorure métallique ;
et
le revêtement de la solution de revêtement sur un substrat poreux pour former une couche de revêtement sur un côté ou sur les deux côtés du substrat poreux ; et
la solidification de la couche de revêtement pour former une couche poreuse thermorésistante sur un côté ou sur les deux côtés du substrat poreux,
les particules inorganiques comprenant un sulfate métallique ou un hydroxyle métallique.

**EP 3 920 299 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008156033 A
- EP 3745492 A1
- EP 3920263 A1
- EP 3920264 A1
- US 2018233726 A1
- US 2011143185 A1
- US 2012321929 A1